# EUROPEAN PATENT APPLICATION

(11) **EP 1 672 945 A1**
(43) Date of publication of application: **21.06.2006**
(21) Application number: 05027409.1
(22) Date of filing: 14.12.2005
(51) Int. Cl.: H04Q 7/38, H04L 12/28

(54) **UMTS-WLAN interworking system and authentication method therefor**

(30) Priority: 14.12.2004 KR 2004105862
(71) Applicant: Samsung Electronics Co., Ltd., Suwon-si, Gyeonggi-Do (KR)
(72) Inventor: Bae, Eun-Hui, Yeongtong-gu Suwon-si Gyeonggi-do (KR); Song, O-Sok, Yeongtong-gu Suwon-si Gyeonggi-do (KR); Choi, Sung-Ho, Yeongtong-gu Suwon-si Gyeonggi-do (KR)
(74) Representative: Grünecker, Kinkeldey, Stockmair & Schwanhäusser Anwaltssozietät

(57) **Abstract**

A system and method for enabling fast authentication for a UE when a handoff occurs during a service in a UMTS-WLAN interworking network are provided. When the UE moves from the UMTS network to the WLAN or vice versa, it can advantageously reuse authentication information used in the old network for authentication and data encryption in the new network.

## Description

### BACKGROUND OF THE INVENTION

### 1. Field of the Invention

The present invention relates generally to a Universal Mobile Telecommunications System (UMTS)-Wireless Local Area Network (WLAN) interworking system. More particularly, the present invention relates to a system and method for enabling fast authentication for handoff of a User Equipment (UE) in a UMTS-WLAN interworking network.

### 2. Description of the Related Art

When a handoff is initiated as a UE moves from a UMTS network to a WLAN or vice versa in the UMTS-WLAN interworking network, the UE performs an authentication procedure again in the WLAN or UMTS. At the handoff, an authentication and key agreement with different network entities takes place for the UE.

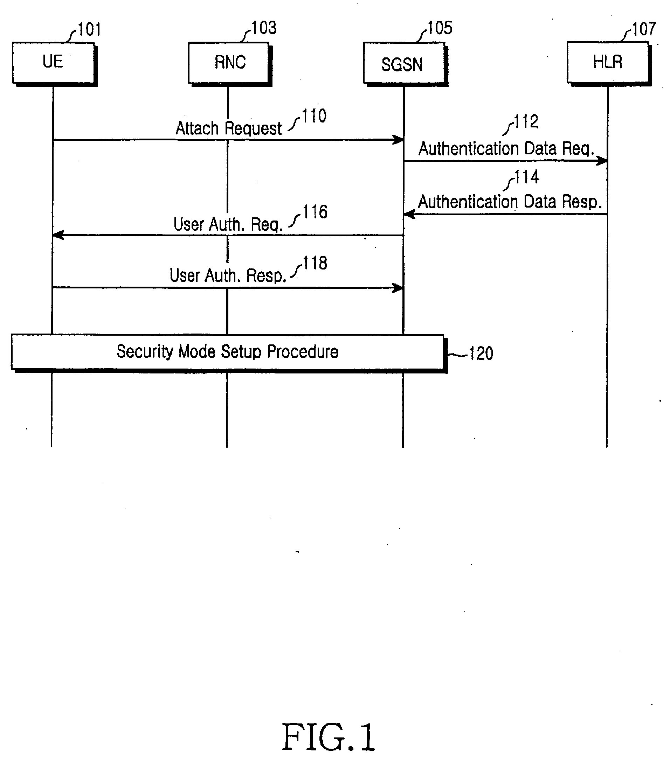

With reference to FIG. 1, the following describes a typical UMTS-Authentication Key Agreement (AKA) procedure for authentication of a UE to a UMTS network.

FIG. 1 is a diagram illustrating a signal flow for the UMTS-AKA procedure.

Referring to FIG. 1, a UE 101 sends an Attach Request message to a Serving GPRS Support Network (SGSN) 105 in step 110. Upon receipt of the Attach Request message, the SGSN 105 sends an Authentication Data Req. message including the International Mobile Station Identifier (IMSI) of the UE 101 to a Home Location Register (HLR) 107 in step 112.

In step 114, the HLR 107 sends an Authentication Data Resp. message including Authentication-Vectors (AVs) to the SGSN 105. Each of the AVs includes a random number RAND, an authentication token AUTN, a cipher key CK, an integrity key IK, and an expected response XRES.

The SGSN 105 sends the RAND and AUTN of a received AV to the UE 101 by a User Auth. Req. message in step 116 and the UE 101 sends a User Auth. Resp. message including a response RES for the User Auth. Req. message to the SGSN 105 in step 118.

In step 120, the SGSN 105 compares the RES with the XRES of the AV and if they match, authenticates the UE 101 by performing a Security Mode Setup procedure involving encryption key establishment and distribution.

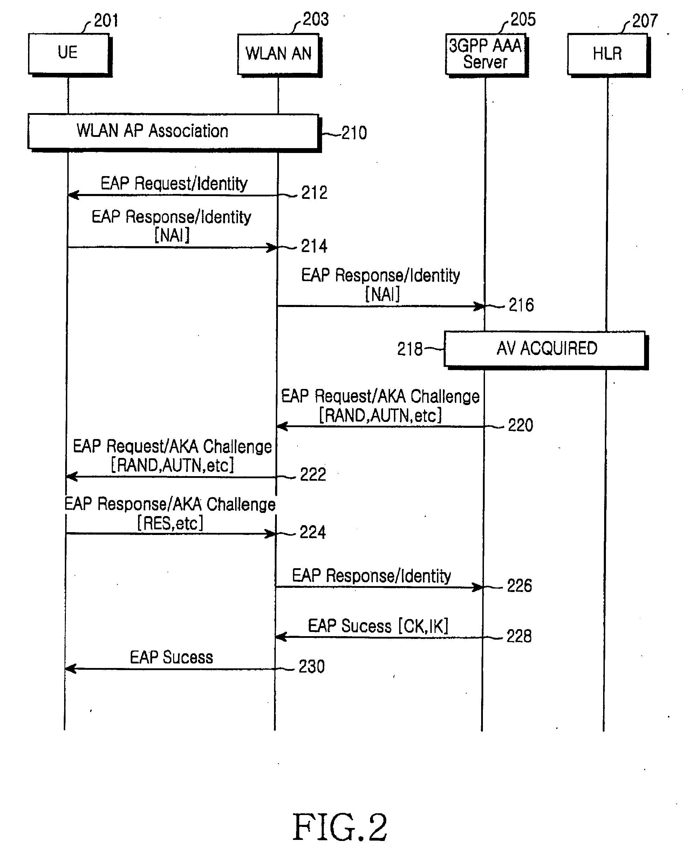

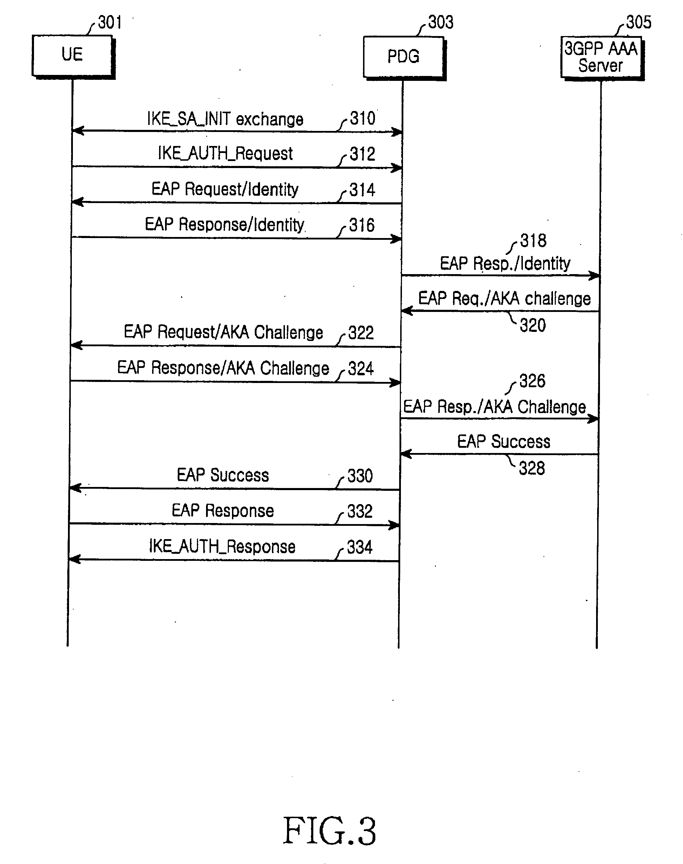

With reference to FIGs. 2 and 3, a typical procedure for authenticating a UE to a WLAN, Enhanced Authentication Protocol (EAP)-AKA will be described below.

The EAP-AKA procedure is performed for access network authentication and Internet Key Exchange (IKE)-based Core Network (CN) authentication. In the former case, the key goal of the EAP-AKA is safe data exchange over the WLAN by mutual authentication between a UE 201 and a 3^{rd} Generation Partnership Project (3GPP) Authentication, Authorization and Accounting (AAA) server 205 and sharing of a CK and an IK between the UE 201 and a WLAN Access Network (AN) 203. In the latter case, the EAP-AKA is used to authenticate whether a UE 301 can access a CN via a 3GPP AAA server 305 using an IKE protocol and to exchange CKs and IKs to enable safe data exchange between the UE 301 and a Packet Data Gateway (PDG) 303.

FIG. 2 is a diagram illustrating a signal flow for the EAP-AKA procedure for access network authentication in a typical UMTS-WLAN interworking network.

Referring to FIG. 2, the UE 201 performs a WLAN Access Point (AP) Association with an AP of the WLAN AN 203 in step 210. The WLAN AN 203 sends an EAP Request/Identity message to the UE 201, requesting the identity of the UE 201 in step 212. The UE 201 replies with an EAP Response/Identity message including the Network Access Identifier (NAI) of the UE 201 in step 214. The NAI is created with the International Mobile Subscriber Identity (IMSI) and domain information and has the form of "imsi@domain", for example.

In step 216, the WLAN AN 203 forwards the EAP Response/Identity message with the NAI to the 3GPP AAA server 205. The 3GPP AAA server 205 and an HLR 207 obtain an AV based on the NAI in step 218. The AV includes a RAND, an AUTN, a CK, an IK and a XRES.

The 3GPP AAA server 205 sends the RAND, AUTN, and reuse and reauthentication values to the UE 201 through the WLAN AN 203 by an EAP Request/AKA Challenge message in steps 220 and 222. The UE 201 sends an EAP Response/AKA Challenge message with an RES to the WLAN AN 203 in step 224.

In step 226, the WLAN AN 203 sends the EAP Response/AKA Challenge message to the 3GPP AAA server 205. If the EAP authentication is successful, the WLAN AN 203 receives an EAP Success message including a CK and an IK from the 3GPP AAA server 205 and stores the CK and IK in step 228. The WLAN AN 203 then informs the UE 201 of the authentication success with the EAP Success message in step 230.

FIG. 3 is a diagram illustrating a signal flow for the EAP-AKA procedure for CN authentication and service authentication in the typical UMTS-WLAN interworking network.

Referring to FIG. 3, the UE 301 and the PDG 303 exchange a pair of messages known as IKE_SA_INIT in step 310. The UE 301 sends an IKE_AUTH_Request message to the PDG 303, requesting an IKE authentication in step 312. In step 314, the PDG 303 sends an EAP Request/Identity message requesting EAP and the identity of the UE 301 to the UE 301. The UE 301 replies with an EAP Response/Identity message in step 316 and the PDG 303 forwards the EAP Response/Identity message to the 3GPP AAA server 305 in step 318.

The 3GPP AAA server 305 sends an EAP Request/AKA Challenge message including PDG authentication information and keying material to the UE 301 through the PDG 303 in steps 320 and 322. The UE 301 sends an EAP Response/AKA Challenge message with an RES for the requested PDG authentication and UE authentication information to the PDG 303 in step 324 and the PDG 303 sends the EAP Response/AKA Challenge message to the 3GPP AAA server 305 in step 326.

If the authentication is successful, the 3GPP AAA server 305 sends an EAP Success message including reauthentication information to the UE 301 through the PDG 303 in steps 328 and 330. Upon receipt of an EAP Response message from the UE 301 in step 332, the PDG 303 replies with an IKE_AUTH_Response message in step 334.

In the UMTS-WLAN interworking network, as described above, the UE performs mutual authentication and creates keys for data security by EAP-AKA in the WLAN, while it does so by UMTS-AKA in the UMTS network. Therefore, even when the valid duration of the authentication keys has not elapsed or the valid amount of data is not reached for the authentication keys, a reauthentication and security key reestablishment must be carried out depending on policies of the target network as the UE moves between the networks.

Accordingly, there is a need for an improved system and method for authenticating a UE in a UMTS-WLAN interworking system.

### SUMMARY OF THE INVENTION

To substantially solve at least the above problems and/or disadvantages and to provide at least the advantages below, embodiments of the present invention provide a method of reducing overhead from reauthentication at handoff of a UE between a UMTS network and a WLAN in a UMTS-WLAN interworking network by transmission of authentication information and key information to be shared between the UMTS network and the WLAN.

The above object is achieved by providing a system and method for enabling fast authentication for a UE when a handoff occurs during a service in a UMTS-WLAN interworking network.

According to one aspect of the present invention, in a method of authenticating a UE connected to a WLAN via a 3GPP AAA server connected to the WLAN and to a mobile communication network including an SGSN in a mobile communication network-WLAN interworking network, an authentication procedure is performed between the WLAN and the UE via the 3GPP AAA server. The 3GPP AAA server sends a first message including authentication information resulting from the authentication procedure to the SGSN. The SGSN stores the authentication information.

According to another aspect of the present invention, in a method of authenticating a UE connected to a mobile communication network including an SGSN via a 3GPP AAA server connected to a WLAN and the mobile communication network in a mobile communication network-WLAN interworking network, an authentication procedure is performed between the mobile communication network and the UE. The SGSN sends a first message including authentication information resulting from the authentication procedure to the 3GPP AAA server. The 3GPP AAA server stores the authentication information by the 3GPP AAA server.

According to a further aspect of the present invention, in a wireless network interworking system, a UE is connected to a WLAN via a mobile communication network-WLAN interworking network. A 3GPP AAA server is connected to the mobile communication network and the WLAN, authenticates the UE, and stores authentication information resulting from the authentication. An SGSN receives the authentication information of the UE from the 3GPP AAA server and stores the received authentication information.

According to still another aspect of the present invention, in a wireless network interworking system, a UE is connected to a mobile communication network via a mobile communication network-WLAN interworking network. An SGSN performs an authentication procedure with the UE, storing authentication information resulting from the authentication procedure, and sends the authentication information to a 3GPP AAA server. The 3GPP AAA server is connected to the mobile communication network and the WLAN, authenticates the UE, and stores the authentication information of the UE received from the SGSN.

### BRIEF DESCRIPTION OF THE DRAWINGS

The above and other objects, features and advantages of exemplary embodiments of the present invention will become more apparent from the following detailed description when taken in conjunction with the accompanying drawings in which:
FIG. 1 is a diagram illustrating a signal flow for a conventional UMTS-AKA procedure;
FIG. 2 is a diagram illustrating a signal flow for an EAP-AKA procedure for access network authentication in a conventional UMTS-WLAN interworking network;
FIG. 3 is a diagram illustrating a signal flow for an EAP-AKA procedure for CN authentication and service authentication in the conventional UMTS-WLAN interworking network;
FIG. 4 schematically illustrates the configuration of the UMTS-WLAN interworking network according to an exemplary embodiment of the present invention;
FIG. 5 is a diagram illustrating a signal flow for a handoff procedure from a WLAN to a UMTS network according to an exemplary embodiment of the present invention; and
FIG. 6 is a diagram illustrating a signal flow for a handoff procedure from the UMTS network to the WLAN according to another exemplary embodiment of the present invention.

Throughout the drawings, like reference numbers will be understood to refer to like elements, features and structures.

### DETAILED DESCRIPTION OF EXEMPLARY EMBODIMENTS

Exemplary embodiments of the present invention will be described herein below with reference to the accompanying drawings. In the specification, detailed descriptions of well-known functions or constructions are omitted for clarity and conciseness.

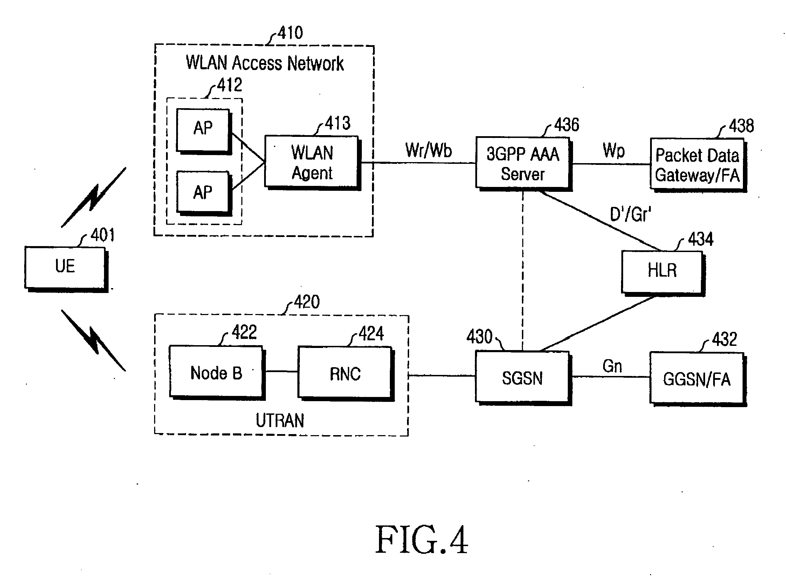

FIG. 4 schematically illustrates the configuration of the UMTS-WLAN interworking network.

Referring to FIG. 4, a WLAN AN 410, connected to an intranet/internet, includes an AP unit 412 and a WLAN agent 413 for managing the AP unit 412. The WLAN AN 410 is connected to a 3GPP AAA server 436 via a Wr/Wb interface and to a PDG/Foreign Agent (FA) 438 via a Wp interface. The 3GPP AAA server 436 performs user authentication and service authentication for a UE 401 in the WLAN AN 410 or a UMTS Terrestrial Radio Access Network (UTRAN) 420 to which the UE 401 moves at a handoff. The 3GPP AAA server 436 is connected to a HLR 434 via a D'/Gr' interface and the HLR 434 is connected to an SGSN 430.

The WLAN AN 410 preferably performs an authentication and key agreement by EAP-AKA for access network authentication of the UE 401 and secure data exchange between the UE 401 and the WLAN AN 410. The PDG/FA 438 preferably performs a CN authentication and key agreement with the UE 401 by EAP-AKA.

The UTRAN 420, connected to the SGSN 430, includes a Node B 422 and a Radio Network Controller (RNC) 424.

The SGSN 430 preferably carriers out a mutual authentication with the UE 401 by UMTS-AKA. The UE 401 creates a CK and an IK based on authentication information received from the SGSN 430 during the mutual authentication. A CK and an IK established between the UE 401 and the SGSN 430 is provided to the RNC 424 for use as encryption keys for data transmission between the UE 401 and the RNC 424. The SGSN 430 is connected to a Gateway GPRS Support Node (GGSN)/FA 432 via a Gn interface.

In the above described conventional UMTS-WLAN interworking environment, the UE 401, when it is located in a WLAN service area, can access the WLAN AN 410 to receive data service. Thus, as the UE 401 moves from the WLAN to the UMTS network, it must perform a reauthentication procedure with the UMTS network, for seamless provisioning of the ongoing data service. In the opposite case, when the UE 401 moves to the WLAN service area during receiving a high-cost, low-rate data service from the UTRAN 420, it also must perform a reauthentication procedure with the WLAN at handoff, for seamless provisioning of the ongoing data service.

In accordance with an exemplary embodiment of the present invention, therefore, a network (that is the 3GPP AAA server or the SGSN) delivers authentication information and key information to be shared between the WLAN and the UMTS network in order to allow the UE 401 to reuse the authentication information of an old network in a new network when a handoff occurs during receiving a data service from the old network in the UMTS-WLAN interworking network. Two cases will be considered in the following description: handoff from the WLAN to the UMTS network and handoff from the UMTS network to the WLAN. In addition, a method of sending authentication information and key information used in the old network in advance before a handoff, and providing a service to the UE without UE authentication in the new network by requesting the authentication information and the key information after the handoff will be described in detail with reference to exemplary embodiments of the present invention.

### Embodiment 1

This embodiment is a method of sending authentication information of the WLAN to the UMTS network beforehand when a handoff is triggered as the UE, which was authenticated to the WLAN, moves to the UMTS network.

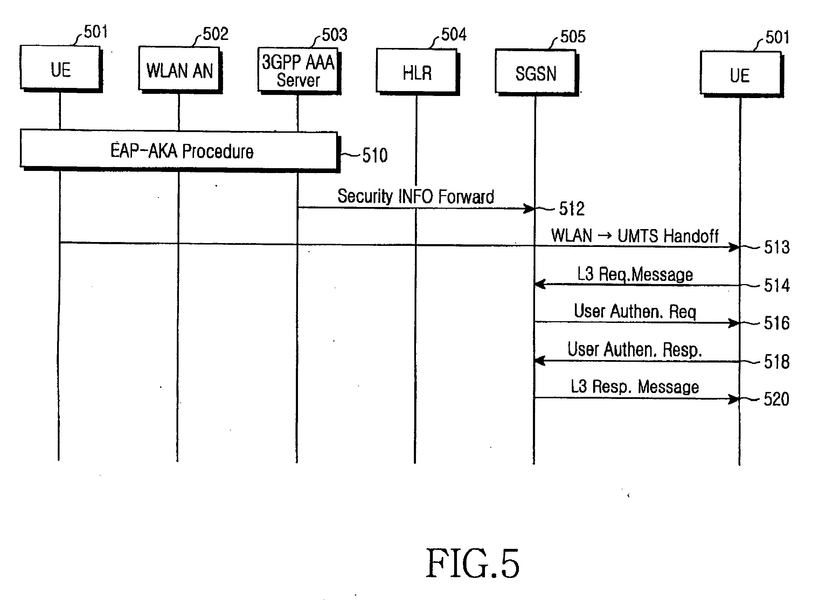

FIG. 5 is a diagram illustrating a signal flow for a procedure for sending authentication information to the UMTS network before handoff from the WLAN to the UMTS network according to an exemplary embodiment of the present invention.

Referring to FIG 5, an EAP-AKA procedure is performed, which involves mutual authentication and creation of authentication keys between a UE 501 and a 3GPP AAA server 503, and transmission of the authentication keys from the UE 501 to a WLAN AN 502 in step 510.

In step 512, the 3GPP AAA server 503 sends authentication information of the UE 501 to an SGSN 505 in the UMTS network by a Security INFO Forward message. The authentication information contains a NAI, a Re-Auth, ID for reauthentication, and unused AVs. The NAI is based on an IMSI or a pseudonym used in the WLAN. If key information is changed before the WLAN-UMTS handoff, the 3GPP AAA server 503 synchronizes the authentication information between the WLAN and the UMTS network each time the key information is changed.

When the handoff from the WLAN to the UMTS network takes place in step 513, the UE 501 sends an L3 (Network Layer) Request message to the SGSN 505, requesting access to the UMTS network in step 514. The L3 Request message contains the IMSI and the Re-Auth. ID. It can be, for example, a GPRS Attach message in the UMTS network.

The SGSN 505 can use unused AVs already received from the WLAN based on the Re-Auth. ID. To be more specific, the SGSN 505 compares the Re-Auth. ID received from the UE 501 with that set in the Security INFOR Forward message. If they match, the SGSN 505 selects one of the unused AVs and performs mutual authentication with the UE 501 using the selected AV

Thus, the SGSN 505 sends the RAND and AUTN of the selected AV to the UE 501 by a User Authentication Request message, for mutual authentication in step 516. The UE 501 verifies that the AUTN is correct using a Master Key (MK) stored in a UMTS Subscriber Identity Module (USIM) and the RAND and hereby authenticates the SGSN 505.

If the SGSN authentication is successful, the UE 501 sends an RES to the SGSN 505 by a User Authentication Response message in step 518. The SGSN 505 generates an XRES using its own MK and compares the XRES with the RES. If they match, the SGSN 505 authenticates the UE 501.

In step 520, the SGSN 505 sends key information to be used for data encryption to a RAN and sends an L3 Response message to the UE 501, thereby completing the authentication and access of the UE 501 to the UMTS network.

### Embodiment 2

Another embodiment of the present invention is a method of sending authentication information to the WLAN beforehand when a handoff is triggered as the UE, which was authenticated to the UMTS network, moves to the WLAN.

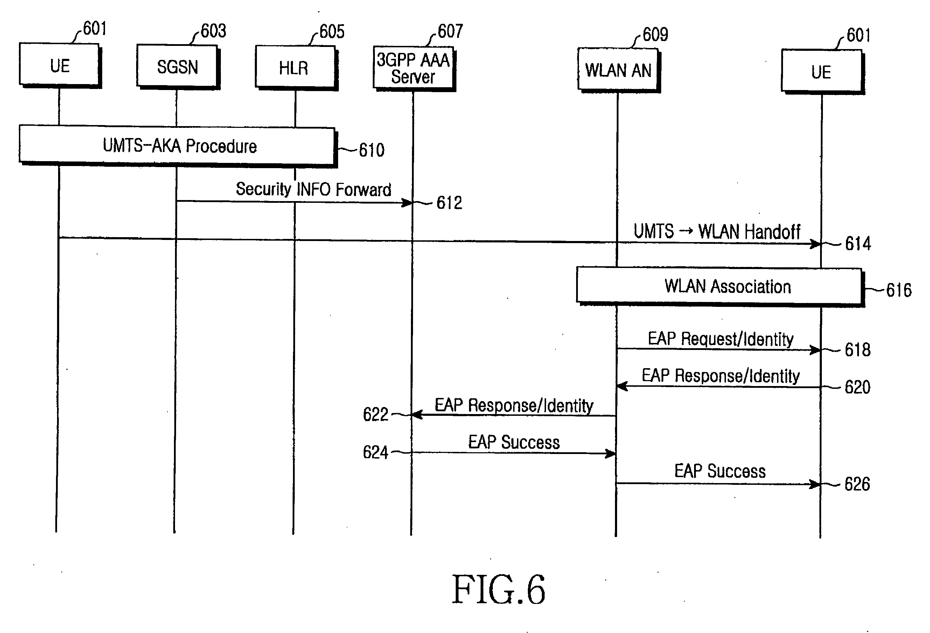

FIG. 6 is a diagram illustrating a signal flow for a procedure for sending authentication information of the UE to the WLAN before handoff from the UMTS network to the WLAN according to another exemplary embodiment of the present invention.

Referring to FIG. 6, a UE 601, which is located in the UMTS network, performs mutual authentication and encryption key sharing with an SGSN 603 and an HLR 605 by the UMTS-AKA procedure specified in FIG. 1 in step 610.

After the authentication, the SGSN 603 sends a Security INFO Forward message including authentication information to a 3GPP AAA server 607 of the WLAN in step 612. The authentication information contains the IMSI of the UE 601, Key Set Identifier (KSI) [i], IK[i], CK[i], and unused AVs [i+1, ... , n]. In the same manner as in the first embodiment, each time the valid duration of the IK and CK expires, the authentication information can be updated. The update of the authentication information in the UMTS network leads to an automatic update of the authentication information in the WLAN by the Security INFO Forward message.

In step 614, a handoff occurs as the UE 601 moves from the UMTS network to the WLAN. The UE 601 is associated with a WLAN AN 609 and thus establishes a wireless connection to the WLAN in step 616. In step 618, the WLAN AN 609 sends an EAP Request/Identity message to the UE 601, requesting the identity of the UE 601 (that is, an IMSI and a Packet-Temporary Mobile Station Identifier (P-TMSI)). The UE 601 sends an EAP Response/Identity message including a NAI based on the IMSI and KSI[i] used in the UMTS network to a 3GPP AAA server 607 through the WLAN AN 609 in steps 620 and 622.

The 3GPP AAA server 607 determines the IMSI from the NAI and compares the authentication information of the UE 601 corresponding to the IMSI with KSI[i]. If they match, the 3GPP AAA server 607 creates a Next Re-Auth. ID for the next reauthentication of the UE 601 to the WLAN and sends the Next Re-Auth. ID together with CK[i] and IK[i] to the WLAN AN 609 by an EAP Success message in step 624. Upon receipt of the EAP Success message, the WLAN AN 609 stores CK[i] and IK[i], reconstructs the EAP Success message to include only the Next Re-Auth. ID, and sends the EAP Success message to the UE 601 in step 626.

While not shown, at the handoff from the UMTS network to the WLAN, the UE 601 further sends the KSI to the WLAN AN 609, for the EAP-AKA procedure based on the IKE protocol. Thus the WLAN AN 609 acquires the authentication and key information and sends the Next Re-Auth. ID to the UE. Therefore, the UE can receive a seamless service by reusing the authentication information of the UMTS network without reauthentication and key reestablishment in the WLAN.

As described above, embodiments of the present invention advantageously reduce the overhead of reauthentication at handoff of a UE between a UMTS network and a WLAN in a UMTS-WLAN interworking network. Furthermore, since an unnecessary reauthentication delay does not occur despite the handoff, handoff delay and packet loss are reduced and seamless service is provided to a user.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A method of authenticating a user equipment (UE) connected to a wireless local area network (WLAN) via a 3^{rd} generation partnership project (3GPP) authentication, authorization and accounting (AAA) server connected to the WLAN and to a mobile communication network including a serving GPRS support node (SGSN) in a mobile communication network-WLAN interworking network, the method comprising the steps of:
performing an authentication procedure between the WLAN and the UE via the 3 GPP AAA server;
sending a first message including authentication information resulting from the authentication procedure to the SGSN by the 3GPP AAA server; and
storing the authentication information by the SGSN.

2. The method of claim 1, further comprising the steps of:
receiving a second message including authentication information of the UE and requesting a connection to the mobile communication network from the UE, when the UE moves from the WLAN to the mobile communication network, and comparing the authentication information included in the first message with the authentication information included in the second message by the SGSN; and
authenticating the UE using the authentication information of the first message if the authentication information matches between the first and second messages, and completing the connection of the UE to the mobile communication network by the SGSN.

3. The method of claim 1, wherein the authentication information included in the first message includes a network access identifier (NAI) of the UE and a reauthentication identifier (ID) for reauthenticating the UE.

4. The method of claim 3, wherein the authentication information comparing step further comprises comparing the reauthentication ID of the first message with a reauthentication ID of the second message.

5. The method of claim 3, wherein the authentication information included in the first message further includes an unused authentication vector among authentication vectors created from the authentication procedure.

6. The method of claim 5, wherein the authentication vector includes a random number and an authentication token, and the step of authenticating the UE using the authentication information of the first message further comprises sending the random number and the authentication vector included in the first message to the UE by the SGSN and verifying the authentication vector by the UE.

7. The method of claim 6, wherein the authentication procedure between the WLAN and the UE is Enhanced Authentication Protocol (EAP)-Authentication Key Agreement (AKA).

8. A method of authenticating a user equipment (UE) connected to a mobile communication network including a serving GPRS support node (SGSN) via a 3^{rd} generation partnership project (3GPP) authentication, authorization and accounting (AAA) server connected to a wireless local area network (WLAN) and the mobile communication network in a mobile communication network-WLAN interworking network, the method comprising the steps of:
performing an authentication procedure between the mobile communication network and the UE;
sending a first message including authentication information resulting from the authentication procedure to the 3GPP AAA server by the SGSN; and
storing the authentication information by the 3 GPP AAA server.

9. The method of claim 8, further comprising the steps of:
connecting to the WLAN by the UE at a handoff from the mobile communication network to the WLAN;
receiving a second message requesting the identity of the UE from the WLAN by the UE located in the WLAN, sending a third message including the identity of the UE and authentication information used in the mobile communication network to the 3GPP AAA server via the WLAN by the UE, and comparing the authentication information of the third message with the authentication information of the first message by the SGSN; and
creating a reauthentication identifier (ID) for reauthenticating the UE in the WLAN if the authentication information matches between the first and third messages, and sending the reauthentication ID to the UE via the WLAN by the 3GPP AAA server.

10. The method of claim 8, wherein the authentication information included in the first message includes a network access identifier (NAI) of the UE and an authentication key in use for the UE.

11. The method of claim 10, wherein the authentication information comparing step further comprises comparing the authentication key of the first message with an authentication key of the third message.

12. The method of claim 10, wherein the authentication information included in the first message further includes an unused authentication vector among authentication vectors created from the authentication procedure.

13. The method of claim 9, wherein the reauthentication ID sending step further comprises sending the authentication key included in the first message and the reauthentication ID to the WLAN by the 3GPP AAA server and storing the authentication key by the WLAN.

14. The method of claim 8, wherein the authentication procedure is Universal Mobile Telecommunications System (UMTS)-Authentication Key Agreement (AKA).

15. A wireless network interworking system comprising:
a user equipment (UE) connected to a wireless local area network (WLAN) via a mobile communication network-WLAN interworking network;
a 3^{rd} generation partnership project (3GPP) authentication, authorization, and accounting (AAA) server connected to the mobile communication network and the WLAN, for authenticating the UE and storing authentication information resulting from the authentication; and
a serving GPRS support node (SGSN) for receiving the authentication information of the UE from the 3GPP AAA server and storing the received authentication information.

16. The wireless network interworking system of claim 15, wherein the SGSN receives a first message including authentication information of the UE and requesting a connection to the mobile communication network from the UE at a handoff from the WLAN to the mobile communication network, compares the authentication information included in the first message with the authentication information received from the 3GPP AAA server, authenticates the UE using the authentication information received from the 3GPP AAA server if the authentication information matches, and allows the connection of the UE to the mobile communication network.

17. The wireless network interworking system of claim 15, wherein the authentication information received from the 3GPP AAA server includes a network access identifier (NAI) of the UE and a reauthentication identifier (ID) for reauthenticating the UE.

18. The wireless network interworking system of claim 17, wherein the SGSN compares the reauthentication ID included in the authentication information received from the 3GPP AAA server with a reauthentication ID of the first message.

19. The wireless network interworking system of claim 17, wherein the authentication information received from the 3GPP AAA server further includes an unused authentication vector among authentication vectors created from the authentication.

20. The wireless network interworking system of claim 19, wherein the authentication vector includes a random number and an authentication token, the SGSN sends the random number and the authentication vector included in the authentication information from the 3GPP AAA server, and the UE verifies the authentication vector.

21. The wireless network interworking system of claim 15, wherein each time the authentication information of the UE is changed, the 3GPP AAA server sends the changed authentication information to the SGSN.

22. A wireless network interworking system comprising:
a user equipment (UE) connected to a mobile communication network via a mobile communication network-wireless local area network (WLAN) interworking network;
a serving GPRS support node (SGSN) for performing an authentication procedure with the UE, storing authentication information resulting from the authentication procedure, and sending the authentication information to a 3^{rd} generation partnership project (3GPP) authentication, authorization, and accounting (AAA) server;
wherein the 3GPP AAA server is connected to the mobile communication network and the WLAN, for authenticating the UE and storing the authentication information of the UE received from the SGSN.

23. The wireless network interworking system of claim 22, wherein the WLAN sends a first message requesting the identity of the UE to the UE at a handoff from the mobile communication network to the WLAN, receives a second message including authentication information of the UE used in the mobile communication network and the identity of the UE from the UE, and sends the second message to the 3GPP AAA server.

24. The wireless network interworking system of claim 23, wherein the 3GPP AAA server compares the authentication information of the second message received from the WLAN with the authentication information received from the SGSN, and if the authentication information matches, creates a reauthentication identifier (ID) for reauthenticating the UE in the WLAN and sends the reauthentication ID to the UE via the WLAN.

25. The wireless network interworking system of claim 23, wherein the authentication information that the SGSN sends to the 3GPP AAA server includes a network access identifier (NAI) of the UE and an authentication key in use for the UE.

26. The wireless network interworking system of claim 25, wherein the 3GPP AAA server compares an authentication key included in the second message with the authentication key received from the SGSN.

27. The wireless network interworking system of claim 25, wherein the authentication information that the SGSN sends to the 3GPP AAA server further includes an unused authentication vector among authentication vectors created from the authentication procedure.

28. The wireless network interworking system of claim 24, wherein the 3GPP AAA server sends the authentication key included in the first message and the reauthentication ID to the WLAN and the WLAN stores the authentication key.

29. The wireless network interworking system of claim 22, wherein each time the authentication information of the UE is changed, the SGSN server sends the changed authentication information to the 3GPP AAA server.
